# EUROPÄISCHE PATENTSCHRIFT

(11) **EP 2 586 178 B1**
(45) Veröffentlichungstag und Bekanntmachung des Hinweises auf die Patenterteilung: **28.12.2016**
(21) Anmeldenummer: 11781464.0
(22) Anmeldetag: 24.10.2011
(51) Int. Cl.: H04L 29/06, H04L 12/22

(54) **VERFAHREN ZUR MANIPULATIONSGESICHERTEN SCHLÜSSELVERWALTUNG**
METHOD FOR TAMPERPROOF KEY MANAGEMENT
MÉTHODE INVIOLABLE DE GESTION DE CLÉS

(30) Priorität: 29.10.2010 DE 102010043102
(43) Veröffentlichungstag der Anmeldung: 01.05.2013
(73) Patentinhaber: Siemens Aktiengesellschaft, 80333 München (DE)
(72) Erfinder: FALK, Rainer, 85586 Poing (DE); SATTLER, Carsten, 39114 Magdeburg (DE); SEIFERT, Matthias, 38126 Braunschweig (DE)
(86) Internationale Anmeldenummer: PCT/EP2011/068491
(87) Internationale Veröffentlichungsnummer: WO 2012/055794

(56) Entgegenhaltungen:
- WO-A1-02/078290
- US-A1- 2010 037 311

## Beschreibung

Die vorliegende Erfindung bezieht sich auf ein Verfahren zur manipulationsgesicherten Schlüsselverwaltung, insbesondere für ein virtuelles privates Netzwerk.

### Stand der Technik

Industrielle Feldgeräte wie beispielsweise Steuergeräte für Bahn- und Gleisanlagen kommunizieren immer häufiger über offene Kommunikationsprotokolle wie TCP/IP anstatt über proprietäre Protokolle. Dabei nutzen sie öffentliche Netzwerke wie beispielsweise das Internet, um Kommunikationsdaten an eine Zentrale oder andere Feldgeräte zu übertragen. Um die Übertragung von Daten gegenüber Manipulation zu schützen, werden kryptographische Schutzmechanismen eingesetzt, beispielsweise SSL/TLS oder IPsec.

Häufig ist es jedoch nicht praktikabel, Feldgeräte selbst mit derartiger Netzwerktechnik auszustatten, so dass meist externe Geräte eingesetzt werden, um virtuelle private Netzwerke (VPN) zur Kommunikation von Feldgeräten über öffentliche Netzwerke wie das Internet aufzubauen und die erforderliche Sicherheit zu gewährleisten. Derartige externe Geräte müssen für die Kommunikation mit kryptographisch abgesicherten Daten konfiguriert werden. Hierzu ist ein geheimer kryptographischer Kommunikationsschlüssel notwendig, mit welchem Daten, die über das VPN versendet und empfangen werden, verschlüsselt und entschlüsselt werden können.

Die Druckschrift US 2010/0037311 A1 offenbart ein Netzwerk mit Netzwerkknoten, welche jeweils über eine manipulationsgeschützte Schlüsselumgebung verfügen, in der Kommunikationsschlüssel gespeichert sind.

Die Druckschrift WO 02/078290 A1 offenbart Verfahren zum Initiieren von sicheren Kommunikationsverbindungen zwischen Knoten eines virtuellen privaten Netzwerks.

Die Konfiguration der externen Geräte kann aufwändig sein, insbesondere wenn nach dem Auftreten eines Fehlers eine Rekonfiguration notwendig wird. Eine Möglichkeit ist es, die externen Geräte vor Ort aufzusuchen und zu rekonfigurieren. Diese Möglichkeit ist sehr zeitintensiv. Eine weitere Möglichkeit ist das eigenständige Rekonfigurieren der externen Geräte, womit allerdings gewisse Sicherheitsrisiken für die in den externen Geräten gespeicherten Konfigurationsdaten verbunden sind.

Es besteht daher ein Bedarf an einem Verfahren für eine Schlüsselverwaltung für ein externes VPN-Gerät für Feldgeräte, mit welchem bei einfacher Konfiguration gleichzeitig eine hohe Sicherheit der kryptographischen Daten gewährleistet bleibt.

### Zusammenfassung der Erfindung

Eine Ausführungsform der vorliegenden Erfindung nach Anspruch 1 besteht daher in einem Verfahren zur manipulationsgesicherten Schlüsselverwaltung für ein virtuelles privates Netzwerk, bei welchem ein Authentisieren eines Kommunikationsendgeräts an einem Authentifizierungsserver mit Hilfe eines ersten Schlüssels über ein öffentliches Netzwerk erfolgt. Nach erfolgreicher Authentifizierung wird ein Kommunikationsschlüssel, der für die Kommunikation über ein virtuelles privates Netzwerk in dem öffentlichen Netzwerk geeignet ist, für das authentifizierte Kommunikationsendgerät über das öffentliche Netzwerk geschützt bereitgestellt. Danach erfolgt ein Verschlüsseln des Kommunikationsschlüssels im Kommunikationsendgerät mit Hilfe eines zweiten Schlüssels, der durch eine manipulationsgeschützte Überwachungseinrichtung bereitgestellt wird. Dieses Verfahren hat den Vorteil, dass eine Konfiguration eines Kommunikationsendgeräts für eine Kommunikation in einem virtuellen privaten Netzwerk über ein öffentliches Netzwerk möglich ist, ohne dass die Sicherheit der für die Kommunikation über das virtuelle private Netzwerk nötigen kryptographischen Daten gegenüber Manipulation an dem Kommunikationsendgerät gefährdet ist.

Vorteilhafterweise umfasst ein erfindungsgemäßes Verfahren das Erfassen von Manipulationsvorgängen an der manipulationsgeschützten Überwachungseinrichtung und das Entwerten des zweiten Schlüssels im Falle der Erfassung eines Manipulationsvorgangs an der manipulationsgeschützten Überwachungseinrichtung. Dies hat den Vorteil, dass bei einem Angriff auf das virtuelle private Netzwerk auf der Seite des Kommunikationsendgeräts die kryptographischen Daten zuverlässig unbrauchbar gemacht werden.

Vorteilhafterweise wird der mit Hilfe des zweiten Schlüssels verschlüsselte Kommunikationsschlüssel in einem Speicher gespeichert, so dass ein Entschlüsseln des gespeicherten Kommunikationsschlüssels durch das Kommunikationsendgerät nur mit Hilfe des zweiten Schlüssels möglich ist.

In einer bevorzugten Ausführungsform des Verfahrens erfolgt ein Überwachen des Energieversorgungszustands der manipulationsgeschützten Überwachungseinrichtung und ein Entwerten des zweiten Schlüssels im Falle einer unzureichenden Energieversorgung in der manipulationsgeschützten Überwachungseinrichtung. Damit kann auch im Falle des Ausfalls der Stromversorgung eine Sicherheit der kryptographischen Daten gewährleistet werden.

Gemäß einer weiteren Ausführungsform der vorliegenden Erfindung umfasst eine Vorrichtung zur manipulationsgesicherten Schlüsselverwaltung für ein virtuelles privates Netzwerk nach Anspruch 7 ein Kommunikationsendgerät mit einem ersten Schlüssel, wobei das Kommunikationsendgerät dazu ausgelegt ist, sich an einem Authentifizierungsserver mit Hilfe des ersten Schlüssels über ein öffentliches Netzwerk zu authentisieren und über ein virtuelles privates Netzwerk in dem öffentlichen Netzwerk mit einem Kommunikationsschlüssel, der durch den Authentifizierungsserver geschützt bereitgestellt wird, zu kommunizieren, eine Überwachungseinrichtung, welche dazu ausgelegt ist, einen zweiten Schlüssel bereitzustellen, Manipulationsvorgänge an der Vorrichtung zu erfassen und im Falle der Erfassung eines Manipulationsvorganges den zweiten Schlüssel zu entwerten, und einen Speicher, welcher dazu ausgelegt ist, den mit Hilfe des zweiten Schlüssels verschlüsselten Kommunikationsschlüssel zu speichern. Mit der erfindungsgemäßen Vorrichtung kann es vorteilhafterweise Feldgeräten ermöglicht werden, über ein virtuelles privates Netzwerk sicher in einem öffentlichen Netzwerk zu kommunizieren, ohne dass bei einer Manipulation an der Vorrichtung die Sicherheit der für das virtuelle private Netzwerk nötigen kryptographischen Daten gefährdet ist.

Vorteilhafterweise kann das Kommunikationsendgerät auf den in dem Speicher abgelegten verschlüsselten Kommunikationsschlüssel nur mit Hilfe des zweiten Schlüssels zugreifen.

Gemäß einer Ausführungsform umfasst die Vorrichtung eine Energieversorgungseinrichtung, die die Überwachungseinrichtung und das Kommunikationsendgerät mit Energie versorgt, und einen Energiespeicher, der mit der Energieversorgungseinrichtung verbunden ist und dazu ausgelegt ist, die Überwachungseinrichtung bei einer Unterbrechung der Energieversorgung durch die Energieversorgungseinrichtung temporär mit Energie zu versorgen. Damit kann auch im Falle des Ausfalls der Stromversorgung eine Sicherheit der kryptographischen Daten gewährleistet werden, da die Überwachungseinrichtung zumindest zeitweise unabhängig von der Hauptenergieversorgung arbeiten kann und nötige Sicherungsmaßnahmen einleiten kann.

Weitere Modifikationen und Variationen ergeben sich aus den Merkmalen der abhängigen Ansprüche.

### Kurze Beschreibung der Figuren

Verschiedene Ausführungsformen und Ausgestaltungen der vorliegenden Erfindung werden nun in Bezug auf die beiliegenden Zeichnungen genauer beschrieben, in denen
- Fig. 1: eine schematische Darstellung einer VPN-Umgebung gemäß einer Ausführungsform der Erfindung;
- Fig. 2: eine schematische Darstellung eines Feldgerätes mit einer Vorrichtung zum Aufbau eines VPN gemäß einer weiteren Ausführungsform der Erfindung; und
- Fig. 3: ein Schema eines Verfahrens zur manipulationsgesicherten Schlüsselverwaltung gemäß einer weiteren Ausführungsform der Erfindung zeigt.

Die beschriebenen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Gleiche Bezugszeichen bezeichnen dabei gleiche oder ähnlich wirkende Komponenten.

### Ausführliche Beschreibung der Erfindung

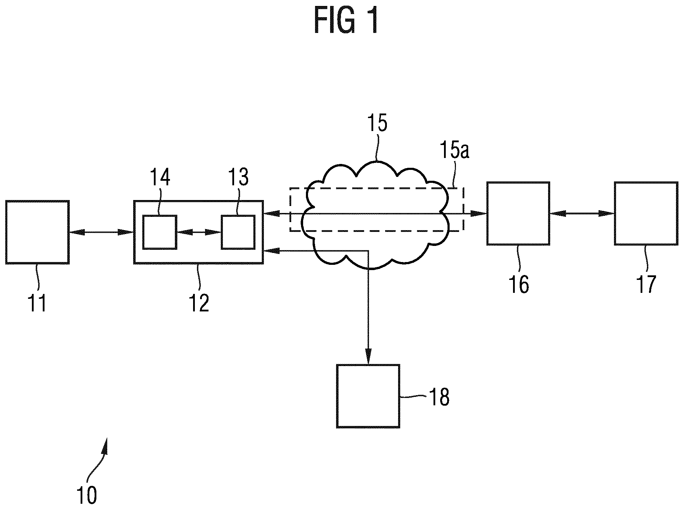

Fig. 1 zeigt eine schematische Darstellung einer VPN-Umgebung 10 gemäß einer Ausführungsform der Erfindung. Die VPN-Umgebung 10 umfasst ein Feldgerät 11. Das Feldgerät 11 kann beispielsweise ein Steuergerät für eine Bahn- oder Gleisanlage sein, zum Beispiel für eine Weiche, eine Schranke oder ein Signal. Das Feldgerät 11 kann jedoch jedes andere entfernt gelegene Gerät sein, wie beispielsweise eine Wetterstation oder eine Ampel. Damit das Feldgerät 11 mit einer zentralen Station 17, wie beispielsweise einem Stellwerk, Steuernachrichten und Steuerdaten austauschen kann, ist eine Kommunikationseinrichtung 12 vorhanden, die mit dem Feldgerät 11 verbunden ist und über ein Netzwerk 15 mit einer Gegenstelle 16 kommuniziert, die ihrerseits mit der zentralen Station 17 verbunden ist. Die Kommunikationseinrichtung 12 kann als externes Gerät aufgebaut oder in dem Feldgerät 11 integriert sein.

Die Übertragung der Steuerdaten erfolgt über das Netzwerk 15, welches ein öffentliches Netzwerk wie beispielsweise das Internet, ein Mobilfunknetzwerk wie beispielsweise UMTS, LTE oder WiMAX, ein Drahtlosnetzwerk wie beispielsweise WLAN, ein Ethernet-Netzwerk, ein Token-Ring-Netzwerk oder ein anderes vergleichbares Netzwerk sein kann. Die Steuerdaten, die über das Netzwerk 15 übertragen werden, sind daher potentiellen Angriffen ausgesetzt. Daher ist für die Kommunikation der Kommunikationseinrichtung 12 mit der Gegenstelle 16 ein virtuelles privates Netzwerk 15a (VPN) eingerichtet, über welches Daten mit kryptographischem Schutz über entsprechende Verschlüsselung versandt und empfangen werden können. Zur Verschlüsselung kann jede bekannte Verschlüsselungstechnik wie beispielsweise IPsec, IKE, EAP, SSL/TLS, MACsec, L2TP, PPTP, PGP, S/MIME oder ähnliche Techniken eingesetzt werden. Das Verschlüsseln kann dabei als eine Berechnung einer kryptographischen Prüfsumme (Message Authentication Code, Digitale Signatur), die Entschlüsselung als das Prüfen einer kryptographischen Prüfsumme ausgestaltet sein.

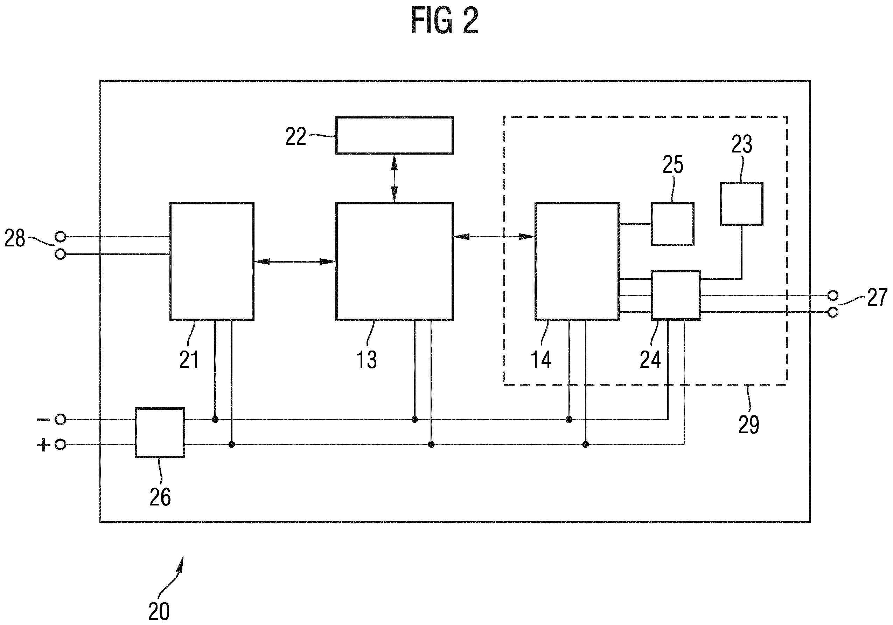

Die Kommunikationseinrichtung 12 verfügt daher über einen (oder mehrere) Kommunikationsschlüssel, mit dem die zu sendenden Steuerdaten des Feldgerätes 11 kryptographisch verschlüsselt und die zu empfangenden Daten für das Feldgerät 11 kryptographisch entschlüsselt werden. Ein Kommunikationsschlüssel kann direkt verwendet werden. Ebenso kann der Kommunikationsschlüssel in einem Authentisierungs- und Schlüsselvereinbarungsprotokoll wie beispielsweise dem IKE-Protokoll verwendet werden, um einen Sitzungsschlüssel einzurichten. Der eingerichtete Sitzungsschlüssel kann dann zur kryptographisch geschützten Übertragung von Steuernachrichten bzw. Steuerdaten mit der Gegenstelle 16 verwendet werden. Die Kommunikationseinrichtung 12 umfasst ein Kommunikationsendgerät 13, welches beispielsweise ein Mikroprozessor sein kann, der über entsprechende Kommunikationsschnittstellen über das Netzwerk 15 eine Kommunikation aufbauen kann. Insbesondere kann das Kommunikationsendgerät 13 für den Aufbau eines VPN ausgelegt sein. Die Kommunikationseinrichtung 12 umfasst weiterhin eine manipulationsgeschützte Überwachungseinrichtung 14, einen sogenannten "Tamper-Watchdog" (abgeleitet von den englischen Begriffen "tamper", was soviel bedeutet wie "manipulieren, herumpfuschen", und "watchdog", was soviel bedeutet wie "Wachhund"). Die manipulationsgeschützte Überwachungseinrichtung 14 und deren Funktionsweise werden im Zusammenhang mit Fig. 2 weiter unten genauer erläutert.

Die VPN-Umgebung 10 umfasst weiterhin einen Server 18, der über sogenannte "Bootstrapping"-Funktionen verfügt, beispielsweise einen Authentifizierungsserver. Bootstrapping bezeichnet ein Vermitteln zwischen einander zuvor unbekannten Endgeräten und Servern, welches die einseitige oder wechselseitige Authentifizierung und - darauf aufbauend - den Austausch geheimer Schlüssel gestattet, wodurch eine erweiterte Nutzung von Anwendungen möglich wird, die eine Authentifizierung und eine gesicherte Kommunikationsbeziehung voraussetzen. Der Server 18 verfügt über eine Adresse, beispielsweise eine IP-Adresse oder eine URL, die in der Kommunikationseinrichtung 12 fest einprogrammiert oder variabel einstellbar sein kann. In einer Ausführungsform ist die Adresse des Servers 18 eine Adresse des Herstellers der Kommunikationseinrichtung 12. In einer weiteren Ausführungsform ist die Adresse des Servers 18 eine Adresse des Betreibers der Kommunikationseinrichtung 12. Es kann jedoch auch möglich sein, über eine andere Adresse von der Kommunikationseinrichtung 12 zunächst eine weitere Adresse eines für die jeweilige Kommunikationseinrichtung 12 zuständigen Servers 18 zu ermitteln, und daraufhin die weitere Adresse zum Aufbau einer Bootstrapping-Verbindung mit dem Server 18 aufzubauen. Es kann dabei möglich sein, für die Auswahl des jeweils zugehörigen Servers 18 zu einer Kommunikationseinrichtung 12 eine Datenbank zu konsultieren. Weiterhin kann es möglich sein, die Auswahl der Adresse des entsprechenden Servers 18 von einem physikalischen Standort des Feldgerätes 11, beispielsweise von GPS-Daten oder anderen Raumkoordinaten abhängig zu machen. Der Server 18 kann auch in die Gegenstelle 16 integriert sein, oder es kann möglich sein, dass die Gegenstelle 16 über entsprechende Bootstrapping-Funktionalität verfügt. In einer Variante kann der Server 18 auch direkt mit der Kommunikationseinrichtung 12 verbunden sein. Es sollte klar sein, dass eine Vielzahl weitere Möglichkeiten für das Zuweisen eines Servers 18 für eine jeweilige Kommunikationseinrichtung 12 möglich ist.

Eine VPN-Konfiguration umfasst beispielsweise Informationen über die Adresse des Servers 18, die Adresse der Gegenstelle 16, ein öffentlicher Schlüssel bzw. ein digitales Zertifikat der Gegenstelle 16, das zu verwendende VPN-Protokoll, Beschreibung der Sicherheitseinstellungen, beispielsweise des Schlüssels und des Modus für die jeweilige VPN-Verbindung 15a und/oder Filterregeln über zulässigen Datenverkehr. Diese Informationen können textuell, beispielsweise als Attribut-Werte-Paar, oder als XML-Dokument vorliegen. Es kann weiterhin auch möglich sein, mehrere VPN-Verbindungen 15a für ein Feldgerät 11 aufzubauen, um beispielsweise unterschiedliche Verkehrsarten, beispielsweise Steuerung, Überwachung, Wartungszugriff und ähnliche Funktionen in separaten VPN-Verbindungen 15a zu realisieren.

Fig. 2 zeigt eine schematische Darstellung eines Feldgerätes 20 mit einer Vorrichtung zum Aufbau eines VPN gemäß einer weiteren Ausführungsform der Erfindung. Das Feldgerät 20 umfasst ein Kommunikationsendgerät 13, eine manipulationsgeschützte Überwachungseinrichtung 14, eine Kommunikationsschnittstelle 21 mit Kommunikationsein- und -ausgängen 28, einen Speicher 22 und eine Energieversorgungseinrichtung 26.

Das Kommunikationsendgerät 13 ist mit der manipulationsgeschützten Überwachungseinrichtung 14, der Kommunikationsschnittstelle 21 und dem Speicher 22 verbunden. Das Kommunikationsendgerät 13 kann beispielsweise eine Recheneinheit/Steuereinheit wie beispielsweise ein Mikroprozessor sein, welches über die Kommunikationsschnittstelle 21 über Kommunikationsein- und -ausgänge 28 eine Kommunikation, insbesondere eine VPN-Kommunikation mit einem übergeordneten Leitrechner, wie beispielsweise der zentralen Station 17 in Fig. 1 aufbauen kann. Die Kommunikationsschnittstelle 21 kann dazu ausgelegt sein, Verbindungen mit verschiedenen Netzwerken aufzubauen, beispielsweise das Internet, ein Mobilfunknetzwerk wie beispielsweise UMTS, LTE oder WiMAX, ein Drahtlosnetzwerk wie beispielsweise WLAN, ein Ethernet-Netzwerk, ein Token-Ring-Netzwerk oder ein anderes vergleichbares Netzwerk. Es kann vorgesehen sein, dass das Feldgerät 20 über mehrere verschiedene Kommunikationsschnittstellen 21 verfügt, welche über das Kommunikationsendgerät 13 angesteuert werden können.

Der Speicher 22 kann beispielsweise ein Speicherbaustein sein, in welchem dauerhaft und wiederbeschreibbar Konfigurationseinstellungen des Kommunikationsendgeräts 13 ablegbar sind, beispielsweise ein serielles EEPROM, ein Flash-Speicher oder eine vergleichbare Speichereinrichtung. Insbesondere ist der Speicher 22 dazu ausgelegt, konfigurierbare und nichtkonfigurierbare Schlüssel zu speichern. Eine Speicherung erfolgt dabei über das Kommunikationsendgerät 13.

Das Kommunikationsendgerät 13 ist mit einer manipulationsgeschützten Überwachungseinrichtung 14 verbunden, beispielsweise einem "Tamper-Watchdog". Die manipulationsgeschützte Überwachungseinrichtung 14 kann beispielsweise eine integrierte Schaltung, einen programmierbaren Logikbaustein wie ein GAL oder FPGA, oder einen Mikroprozessor umfassen. Die manipulationsgeschützte Überwachungseinrichtung 14 kann mit einer Eingabe-/Ausgabeschnittstelle 24 verbunden sein, über die eine Kommunikation mit der Außenwelt über Eingabe-/Ausgabeanschlüsse 27 möglich ist und an die weitere Geräte wie beispielsweise ein Sensor 23 angeschlossen werden können. Der Sensor 23 kann ein "Tamper"-Sensor sein, also ein Sensor, welcher eine physikalische Manipulation an dem Feldgerät 20 oder an Teilen des Feldgerätes 20 erkennen kann. Insbesondere kann der Sensor 23 dazu ausgelegt sein, den gestrichelt eingezeichneten Bereich 29 innerhalb des Feldgerätes 20 zu überwachen. Der Bereich 29 kann beispielsweise das manipulationsgeschützte Überwachungseinrichtung 14, den Sensor 23 selbst und die Eingabe-/Ausgabeschnittstelle 24 umfassen. Es kann jedoch auch möglich sein, dass der Bereich 29 andere Bestandteile des Feldgerätes 20 umfasst, beispielsweise das Kommunikationsendgerät 13, den Speicher 22, die Energieversorgungseinrichtung 26 und/oder die Kommunikationsschnittstelle 21. Weiterhin kann es möglich sein, mehrere Sensoren 23 an die Eingabe-/Ausgabeschnittstelle 24 anzuschließen, um verschiedene Bereiche 29 des Feldgerätes 20 zu überwachen und/oder um verschiedene physikalische Manipulationsvorgänge erfassen zu können. Der Sensor 23 kann beispielsweise eine Lichtschranke, einen Temperatursensor, einen externen Schalter, einen Magnetfeldsensor oder ähnliche Vorrichtungen umfassen. Insbesondere kann es vorgesehen sein, dass das Feldgerät 20 in einem Schaltschrank untergebracht ist, dessen Tür bezüglich eines unbefugten Öffnens über einen Schaltsensor überwacht werden kann. Ebenso kann ein Sensor 23 ein Öffnen des Gehäuses des Feldgerätes 20 oder ein Demontieren des Feldgerätes 20 von einer Halterung erfassen. Der Sensor 23 kann ebenso wie die Eingabe-/Ausgabeschnittstelle 24 in die manipulationsgeschützte Überwachungseinrichtung 14 integriert sein.

Das Feldgerät 20 kann weiterhin über eine externe Energieversorgung verfügen, die mittels der Energieversorgungseinheit 26 bereitgestellt werden kann. Die Energieversorgungseinheit 26 kann dazu ausgelegt sein, verschiedene Komponenten des Feldgerätes 20 mit Energie, beispielsweise Strom zu versorgen. Insbesondere können das Kommunikationsendgerät 13, die Kommunikationsschnittstelle 21, die manipulationsgeschützte Überwachungseinrichtung 14 und die Eingabe-/Ausgabeschnittstelle 24 mit Strom versorgt werden.

An die manipulationsgeschützte Überwachungseinrichtung 14 kann ein Energiespeicher 25 angeschlossen sein, in dem temporär Energie zur Energieversorgung der manipulationsgeschützten Überwachungseinrichtung 14 gespeichert werden kann. Beispielsweise kann der Energiespeicher 25 ein Pufferkondensator, beispielsweise ein Doppelschichtkondensator sein. Der Energiespeicher 25 kann damit temporär Strom zur Energieversorgung der manipulationsgeschützten Überwachungseinrichtung 14 bereitstellen, falls die Energieversorgungseinheit 26 oder die externe Energieversorgung ausfallen. Es kann beispielsweise vorgesehen sein, dass die manipulationsgeschützte Über-wachungseinrichtung 14 erkennt, wenn auf den Energiespeicher 25 zurückgegriffen werden muss, um eine ausreichende Energieversorgung zu gewährleisten. In diesem Fall können eine kontrollierte Abschaltung und entsprechende Sicherungsmaßnahmen für die Kommunikationsdaten und Schlüssel getroffen werden, um die Sicherheit des Feldgerätes 20 zu gewährleisten. Der Energiespeicher 25 kann daher zweckmäßigerweise derart gewählt werden, dass die gespeicherte Energie zumindest für ein Ausführen der gewünschten Sicherungsmaßnahmen ausreicht. Dadurch ist vorteilhafterweise eine Manipulationsüberwachung unabhängig von dem Kommunikationsendgerät 13 möglich und der Energieverbrauch dieser Überwachung kann gezielt minimiert werden, ohne dass dadurch eine Sicherheit der Kommunikationsdaten des Feldgerätes 20 kompromittiert würde.

Das Feldgerät 20 kann einen vollständigen oder teilweisen physikalischen Manipulationsschutz aufweisen, beispielsweise indem es mit Epoxyd-Harz vergossen wird und mit Manipulationssensoren versehen wird, die eine Manipulation, beispielsweise ein Eindringen in die Vergussmasse erkennen können. Derartige Sensoren sind beispielsweise Folien, sogenannte "Tamper-Meshes". Diese Folien umfassen Leiterbahngitter, die um zu schützende Geräte verklebt werden können. Ein Manipulationsversuch eines derartig geschützten Gerätes löst Unterbrechungen und/oder Kurzschlüsse aus, die ein entsprechendes Signal für einen Sensor liefern. Es ist möglich, das Feldgerät komplett oder nur teilweise mit den vorstehend genannten Manipulationsschutzmaßnahmen auszustatten. Es kann beispielsweise vorteilhaft sein, nur den Bereich 29 in Fig. 2 mit einem entsprechenden Manipulationsschutz auszustatten. Es sollte klar sein, dass eine Vielzahl von Ausgestaltungen für den Manipulationsschutz möglich ist.

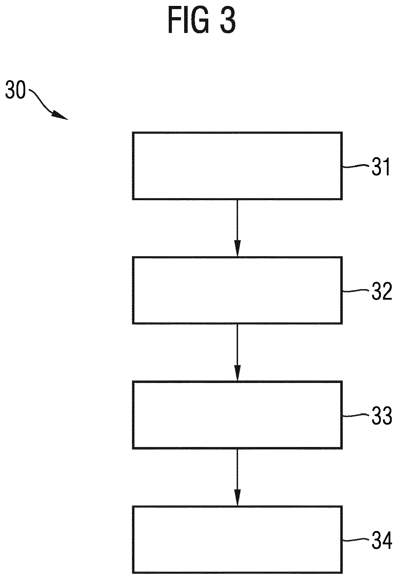

Fig. 3 zeigt ein Schema eines Verfahrens zur manipulationsgesicherten Schlüsselverwaltung gemäß einer weiteren Ausführungsform der Erfindung. Das Verfahren 30 kann dabei insbesondere von einem Feldgerät und einer Kommunikationseinrichtung gemäß eine Ausgestaltung einer der Fig. 1 oder 2 durchgeführt werden.

In einem ersten Schritt 31 erfolgt ein Authentisieren eines Kommunikationsendgerätes, wie beispielsweise des Kommunikationsendgeräts 13 in Fig. 2, an einem Authentifizierungsserver, zum Beispiel einem Server 18 in Fig. 1, mit Hilfe eines ersten Schlüssels über ein öffentliches Netzwerk. Dazu authentisiert sich das Kommunikationsendgerät über ein öffentliches Netzwerk wie beispielsweise das Internet oder ein Mobilfunknetzwerk. Der erste Schlüssel kann dabei beispielsweise ein Geräteschlüssel sein, der für das jeweilige Kommunikationsendgerät spezifisch ist und beispielsweise bei der Herstellung ab Werk einprogrammiert worden sein kann. Der erste Schlüssel kann in einem Speicher, wie beispielsweise dem Speicher 22 in Fig. 2 abgelegt sein. Die Kommunikation zwischen dem Kommunikationsendgerät und dem Authentifizierungsserver kann beispielsweise über SSL/TLS geschützt erfolgen. Der erste Schlüssel kann beispielsweise ein ECC oder RSA Private Key sein. Es ist jedoch klar, dass auch andere Schlüsselarten für den ersten Schlüssel in Frage kommen, wie beispielsweise ein Public/Private Key Pair oder ein symmetrischer Schlüssel.

In einem zweiten Schritt 32 erfolgt ein Bereitstellen eines Kommunikationsschlüssels, der für die Kommunikation über ein virtuelles privates Netzwerk (VPN) in dem öffentlichen Netzwerk geeignet ist, für das authentifizierte Kommunikationsendgerät über das öffentliche Netzwerk. Dabei können VPN-Konfigurationseinstellungen bereitgestellt werden, die den Kommunikationsschlüssel umfassen. Der Kommunikationsschlüssel kann jegliche Art von Schlüssel umfassen, die für eine VPN-Verbindung geeignet sind, beispielsweise einen IPsec-Schlüssel. Der Kommunikationsschlüssel kann insbesondere dann an das Kommunikationsendgerät übergeben werden, wenn von Seiten des Authentifizierungsservers eine Authentisierung des Kommunikationsendgerätes erfolgreich war. Dies kann unter anderem die Überprüfung des ersten Schlüssel und/oder die Überprüfung des ordnungsgemäßen Betriebszustandes des Kommunikationsendgerätes umfassen.

In einem dritten Schritt 33 erfolgt ein Verschlüsseln des Kommunikationsschlüssels in dem Kommunikationsendgerät mit Hilfe eines zweiten Schlüssels, der durch eine manipulationsgeschützte Überwachungseinrichtung bereitgestellt wird. Die manipulationsgeschützte Überwachungseinrichtung kann dazu einen Parameter TPSP als zweiten Schlüssel an das Kommunikationsendgerät übergeben. Der Parameter TPSP kann beispielsweise über einen Zufallsgenerator erzeugt werden und einen zufallsbestimmten Wert aufweisen. Der Parameter TPSP kann dabei vorteilhafterweise nur so lange Gültigkeit besitzen, wie kein Manipulationsversuch durch die manipulationsgeschützte Überwachungseinrichtung festgestellt wird und/oder eine ausreichende Energieversorgung der manipulationsgeschützten Überwachungseinrichtung gewährleistet ist. Im Falle einer Manipulation oder eines Unterschreiten eines kritischen Energieversorgungsniveaus in der manipulationsgeschützten Überwachungseinrichtung kann der Parameter TPSP entwertet werden, beispielsweise kann der momentan gültige Parameter TPSP gelöscht werden oder durch einen anderen zufällig erzeugten Wert TPSP2 überschrieben werden.

Das Kommunikationsendgerät empfängt den zweiten Schlüssel, beispielsweise den Parameter TPSP von der manipulationsgeschützten Überwachungseinrichtung und erzeugt daraus einen Verschlüsselungsschlüssel TPCEK, der zur Verschlüsselung des Kommunikationsschlüssels genutzt werden kann. Der Parameter TPSP kann beispielsweise nur dann empfangen werden, wenn sich das Kommunikationsendgerät gegenüber der manipulationsgeschützten Überwachungseinrichtung authentisiert. Es kann auch möglich sein, dass der Parameter TPSP von einem von dem Kommunikationsendgerät bereitgestellten Parameter, wie beispielsweise einer Seriennummer oder einem Geräteschlüssel abhängig sein kann. Der Verschlüsselungsschlüssel TPCEK kann beispielsweise ein symmetrischer Schlüssel sein, beispielsweise ein AES-Schlüssel. Dabei kann der Verschlüsselungsschlüssel TPCEK entweder direkt den Parameter TPSP umfassen, oder über eine Schlüsselableitung in dem Kommunikationsendgerät als Funktion des Parameters TPSP erzeugt werden. Dabei können bekannte Schlüsselableitungsverfahren wie beispielsweise SHA-1, HMAC, CBC-MAC oder ähnliche Verfahren eingesetzt werden. Weiterhin kann es vorgesehen sein, dass andere Parameter außer dem Parameter TPSP in die Schlüsselableitung für den Verschlüsselungsschlüssel TPCEK miteinbezogen werden, beispielsweise eine feste Zeichenkette, gespeicherte Parameter, Hardware-Parameter wie beispielsweise eine Feldgerätenummer oder eine MAC-Seriennummer des Kommunikationsendgerätes oder ähnliche Parameter.

Nach der Verschlüsselung des Kommunikationsschlüssels durch das Kommunikationsendgerät kann der zur Verschlüsselung genutzte Verschlüsselungsschlüssel TPCEK in dem Kommunikationsendgerät gelöscht werden. Der verschlüsselte Kommunikationsschlüssel kann verschlüsselt in einem Speicher abgelegt werden. Wenn das Kommunikationsendgerät nun zur Kommunikation über das VPN auf den Kommunikationsschlüssel zugreifen soll, muss zunächst der zweite Schlüssel, beispielsweise der Parameter TPSP von der manipulationsgeschützten Überwachungseinrichtung angefordert werden. Dies ist - wie oben erläutert - nur möglich, solange kein Manipulationsversuch erfasst worden ist. Damit ist der verschlüsselte Kommunikationsschlüssel gegenüber Manipulationsversuchen an dem Feldgerät sicher geschützt.

In einem vierten Schritt 34 kann es vorgesehen sein, ein Generieren eines Integritätsschlüssels mit Hilfe des zweiten Schlüssels zur Überprüfung der Integrität des gespeicherten Kommunikationsschlüssels durchzuführen. Der Integritätsschlüssel TPCIK kann dabei ähnlich dem Verschlüsselungsschlüssel TPCEK gebildet sein. Insbesondere kann es vorgesehen sein, zur Schlüsselableitung des Integritätsschlüssel TPCIK eine andere Zeichenkette als weiteren Parameter heranzuziehen, als für den Verschlüsselungsschlüssel TPCEK. Der Integritätsschlüssel kann dabei dazu genutzt werden, die Integrität der in einem Speicher wie dem Speicher 22 in Fig. 2 gespeicherten Konfiguration zu verifizieren.

Wenn ein Kommunikationsendgerät bei einem Aktivieren, beispielsweise einem Anschalten durch Anlegen einer Versorgungsspannung feststellt, dass keine gültige und/oder entschlüsselbare Konfiguration vorliegt, beispielsweise weil ein Fehlverhalten wie ein Manipulationsversuch oder eine Unterbrechung der externen Energieversorgung erfasst worden ist und der entsprechende zweite Schlüssel durch die manipulationsgeschützte Überwachungseinrichtung entwertet worden ist, wird erneut ein Bootstrapping-Verfahren über eine VPN-Verbindung eingeleitet. Es kann auch vorgesehen sein, dass die manipulationsgeschützten Überwachungseinrichtung selbst im Falle eines Manipulationsversuches ein Warnsignal an das Kommunikationsendgerät übermittelt, welches dann entsprechende Bootstrapping-Maßnahmen einleiten kann. Dies bietet den Vorteil, dass beispielsweise nach einem unkritischen Fehlverhalten wie einem Stromausfall das Kommunikationsendgerät von selbst neu konfiguriert werden kann, ohne dass ein Konfigurieren des Feldgerätes vor Ort nötig ist, was dem Wartungspersonal viel Zeit und Arbeit erspart. Gleichzeitig ist es mit dem erfindungsgemäßen Verfahren leichter, ein "aggressiveres" Löschen von Schlüsseln vorzunehmen, also geringere Schwellwerte für das Erfassen von Manipulationsversuchen oder das Ermitteln eines Energieunterversorgungszustandes anzulegen, da ein aufwändiges Wiederinbetriebnehmen durch das erfindungsgemäße Konfigurationsverfahren im Regelfall entfällt.

## Patentansprüche

1. Verfahren (30) zur manipulationsgesicherten Schlüsselverwaltung für ein virtuelles privates Netzwerk (15a), umfassend:
a) Authentisieren eines Kommunikationsendgeräts (13) an einem Authentifizierungsserver (18) mit Hilfe eines ersten Schlüssels über ein öffentliches Netzwerk (15);
b) geschütztes Bereitstellen durch den Authentifizierungsserver (18) eines Kommunikationsschlüssels, der für die Kommunikation über ein virtuelles privates Netzwerk (15a) in dem öffentlichen Netzwerk (15) geeignet ist, für das authentifizierte Kommunikationsendgerät (13) über das öffentliche Netzwerk (15); und
c) Verschlüsseln des Kommunikationsschlüssels in dem Kommunikationsendgerät (13) mit Hilfe eines zweiten Schlüssels, der durch eine manipulationsgeschützte Überwachungseinrichtung (14) bereitgestellt wird.

2. Verfahren (30) nach Anspruch 1, weiterhin umfassend:
Erfassen von Manipulationsvorgängen an der manipulationsgeschützten Überwachungseinrichtung (14); und
Entwerten des zweiten Schlüssels im Falle der Erfassung eines Manipulationsvorgangs an der manipulationsgeschützten Überwachungseinrichtung (14).

3. Verfahren (30) nach Anspruch 1 oder 2, weiterhin umfassend:
Speichern des mit Hilfe des zweiten Schlüssels verschlüsselten Kommunikationsschlüssels.

4. Verfahren (30) nach Anspruch 3, wobei ein Entschlüsseln des gespeicherten Kommunikationsschlüssels durch das Kommunikationsendgerät (13) nur mit Hilfe des zweiten Schlüssels möglich ist.

5. Verfahren (30) nach Anspruch 3 oder 4, weiterhin umfassend:
Generieren eines Integritätsschlüssels mit Hilfe des zweiten Schlüssels zur Überprüfung der Integrität des gespeicherten Kommunikationsschlüssels.

6. Verfahren (30) nach einem der vorangegangenen Ansprüche, weiterhin umfassend:
Überwachen des Energieversorgungszustands der manipulationsgeschützten Überwachungseinrichtung (14); und
Entwerten des zweiten Schlüssels im Falle einer unzureichenden Energieversorgung in der manipulationsgeschützten Überwachungseinrichtung (14).

7. Vorrichtung (20) zur manipulationsgesicherten Schlüsselverwaltung für ein virtuelles privates Netzwerk (15a), umfassend:
a) ein Kommunikationsendgerät (13) mit einem ersten Schlüssel, wobei das Kommunikationsendgerät (13) dazu ausgelegt ist, sich an einem Authentifizierungsserver (18) mit Hilfe des ersten Schlüssels über ein öffentliches Netzwerk (15) zu authentisieren und
b1) über ein virtuelles privates Netzwerk (15a) in dem öffentlichen Netzwerk (15) mit einem Kommunikationsschlüssel, der durch den Authentifizierungsserver (18) geschützt bereitgestellt wird, zu kommunizieren;
b2) eine Überwachungseinrichtung (14), welche dazu ausgelegt ist, einen zweiten Schlüssel bereitzustellen, Manipulationsvorgänge an der Vorrichtung (20) zu erfassen und im Falle der Erfassung eines Manipulationsvorganges den zweiten Schlüssel zu entwerten; und
c) einen Speicher (22), welcher dazu ausgelegt ist, den mit Hilfe des zweiten Schlüssels verschlüsselten Kommunikationsschlüssel zu speichern.

8. Vorrichtung (20) nach Anspruch 7, wobei das Kommunikationsendgerät (13) und die Überwachungseinrichtung (14) Mikroprozessoren umfassen.

9. Vorrichtung (20) nach Anspruch 7 oder 8, wobei das Kommunikationsendgerät (13) dazu ausgelegt ist, auf den in dem Speicher (22) abgelegten verschlüsselten Kommunikationsschlüssel nur mit Hilfe des zweiten Schlüssels zugreifen zu können.

10. Vorrichtung (20) nach einem der Ansprüche 7 bis 9, weiterhin umfassend:
eine Energieversorgungseinrichtung (26), die die Überwachungseinrichtung (14) und das Kommunikationsendgerät (13) mit Energie versorgt; und
einen Energiespeicher (25), der mit der Energieversorgungseinrichtung (26) verbunden ist und dazu ausgelegt ist, die Überwachungseinrichtung (14) bei einer Unterbrechung der Energieversorgung durch die Energieversorgungseinrichtung (26) temporär mit Energie zu versorgen.

11. Vorrichtung (20) nach Anspruch 10, wobei die Überwachungseinrichtung (14) dazu ausgelegt ist, den zweiten Schlüssel zu entwerten, wenn eine Unterbrechung der Energieversorgung durch die Energieversorgungseinrichtung (26) auftritt.

12. Vorrichtung (20) nach Anspruch 8, wobei die Überwachungseinrichtung (14) einen an den Mikroprozessor angeschlossenen Manipulationssensor (23) umfasst.

## Claims

1. Method (30) for managing keys in a manipulation-proof manner for a virtual private network (15a), comprising:
a) authenticating a communication terminal (13) on an authentication server (18) with the aid of a first key by way of a public network (15);
b) the authentication server (18) providing a communication key in a protected manner, which is suitable for communication by way of a virtual private network (15a) in the public network (15), for the authenticated communication terminal (13) by way of the public network (15); and
c) encrypting the communication key in the communication terminal (13) with the aid of a second key, which is provided by a manipulation-protected monitoring facility (14).

2. Method (30) according to claim 1, also comprising:
detecting manipulation operations at the manipulation-protected monitoring facility (14); and
cancelling the second key if a manipulation operation is detected at the manipulation-protected monitoring facility (14).

3. Method (30) according to claim 1 or 2, also comprising:
storing the communication key encrypted with the aid of the second key.

4. Method (30) according to claim 3, wherein decryption of the stored communication key by the communication terminal (13) is only possible with the aid of the second key.

5. Method (30) according to claim 3 or 4, also comprising:
generating an integrity key with the aid of the second key to verify the integrity of the stored communication key.

6. Method (30) according to one of the preceding claims, also comprising:
monitoring the energy supply status of the manipulation-protected monitoring facility (14); and
cancelling the second key, if the energy supply in the manipulation-protected monitoring facility (14) is inadequate.

7. Apparatus (20) for managing keys in a manipulation-proof manner for a virtual private network (15a), comprising:
a) a communication terminal (13) having a first key, the communication terminal (13) being designed to authenticate itself on an authentication server (18) with the aid of the first key by way of a public network (15) and
b1) to communicate by way of a virtual private network (15a) in the public network (15) with a communication key provided by the authentication server (18) in a protected manner;
b2) a monitoring facility (14), which is designed to provide a second key, to detect manipulation operations at the apparatus (20) and, if a manipulation operation is detected, to cancel the second key; and
c) a storage unit (22), which is designed to store the communication key encrypted with the aid of the second key.

8. Apparatus (20) according to claim 7, wherein the communication terminal (13) and the monitoring facility (14) comprise microprocessors.

9. Apparatus (20) according to claim 7 or 8, wherein the communication terminal (13) is designed only to be able to access the encrypted communication key stored in the storage unit (22) with the aid of the second key.

10. Apparatus (20) according to one of claims 7 to 9, also comprising:
an energy supply facility (26) which supplies the monitoring facility (14) and the communication terminal (13) with energy; and
an energy storage unit (25), which is connected to the energy supply facility (26) and is designed to supply the monitoring facility (14) temporarily with energy if the energy supply from the energy supply facility (26) is interrupted.

11. Apparatus (20) according to claim 10, wherein the monitoring facility (14) is designed to cancel the second key, if the energy supply from the energy supply facility (26) is interrupted.

12. Apparatus (20) according to claim 8, wherein the monitoring facility (14) comprises a manipulation sensor (23) connected to the microprocessor.

## Revendications

1. Procédé (30) de gestion de clé inviolable pour un réseau privé virtuel (15a), comprenant :
a) l'authentification d'un terminal de communication (13) sur un serveur d'authentification (18) à l'aide d'une première clé via un réseau public (15) ;
b) la mise à disposition protégée par le serveur d'authentification (18), à destination du terminal de communication (13) authentifié, via le réseau public (15), d'une clé de communication appropriée pour la communication via un réseau privé virtuel (15a) dans le réseau public (15) ; et
c) le codage de la clé de communication dans le terminal de communication (13) à l'aide d'une seconde clé qui est mise à disposition par un dispositif de surveillance (14) inviolable.

2. Procédé (30) selon la revendication 1, comprenant, en outre :
la détection d'opérations de manipulation au niveau du dispositif de surveillance (14) inviolable ; et
la révocation de la seconde clé en cas de détection d'une opération de manipulation au niveau du dispositif de surveillance (14) inviolable.

3. Procédé (30) selon la revendication 1 ou 2, comprenant, en outre :
l'enregistrement de la clé de communication codée à l'aide de la seconde clé.

4. Procédés (30) selon la revendication 3, un décodage de la clé de communication enregistrée par le terminal de communication (13) étant possible uniquement à l'aide de la seconde clé.

5. Procédé (30) selon la revendication 3 ou 4, comprenant, en outre :
la génération d'une clé d'intégrité à l'aide de la seconde clé pour vérifier l'intégrité de la clé de communication enregistrée.

6. Procédé (30) selon l'une des revendications précédentes, comprenant, en outre :
la surveillance de l'état de l'alimentation en énergie du dispositif de surveillance (14) inviolable ; et
la révocation de la seconde clé en cas d'alimentation en énergie insuffisante dans le dispositif de surveillance (14) inviolable.

7. Dispositif (20) de gestion de clé inviolable pour un réseau privé virtuel (15a), comprenant :
a) un terminal de communication (13) disposant d'une première clé, le terminal de communication (13) étant conçu pour s'authentifier sur un serveur d'authentification (18) à l'aide de la première clé via un réseau public (15) et
b1) pour communiquer via un réseau privé virtuel (15a) dans le réseau public (15) avec une clé de communication qui est mise à disposition d'une manière protégée par le serveur d'authentification (18) ;
b2) un dispositif de surveillance (14) qui est conçu pour mettre à disposition une seconde clé, détecter des opérations de manipulation au niveau du dispositif (20) et révoquer la seconde clé en cas de détection d'une opération de manipulation ; et
c) une mémoire (22) qui est conçue pour enregistrer la clé de communication codée à l'aide de la seconde clé.

8. Dispositif (20) selon la revendication 7, le terminal de communication (13) et le dispositif de surveillance (14) comprenant des microprocesseurs.

9. Dispositif (20) selon la revendication 7 ou 8, le terminal de communication (13) étant conçu pour pouvoir accéder à la clé de communication codée enregistrée dans la mémoire (22) uniquement à l'aide de la seconde clé.

10. Dispositif (20) selon l'une des revendications 7 à 9, comprenant, en outre :
un dispositif d'alimentation en énergie (26) qui alimente en énergie le dispositif de surveillance (14) et le terminal de communication (13) ; et
un accumulateur d'énergie (25) qui est relié au dispositif d'alimentation en énergie (26) et est conçu pour fournir une alimentation temporaire en énergie au dispositif de surveillance (14) en cas d'interruption de l'alimentation en énergie par le dispositif d'alimentation en énergie (26).

11. Dispositif (20) selon la revendication 10, le dispositif de surveillance (14) étant conçu pour révoquer la seconde clé lorsque l'alimentation en énergie par le dispositif d'alimentation en énergie (26) s'interrompt.

12. Dispositif (20) selon la revendication 8, le dispositif de surveillance (14) comprenant un détecteur de manipulations (23) connecté au microprocesseur.
